# EUROPÄISCHE PATENTSCHRIFT

(11) **EP 1 688 168 B1**
(45) Veröffentlichungstag und Bekanntmachung des Hinweises auf die Patenterteilung: **11.03.2009**
(21) Anmeldenummer: 06112810.4
(22) Anmeldetag: 03.03.2004
(51) Int. Cl.: B01D 1/22, B01D 1/30, C08G 2/08

(54) **Verfahren zur Auftrennung flüssiger Stoffgemische in einem Filmverdampfer**
Process for separating liquid compositions in a film evaporator
Procédé pour séparer des compositions liquides dans un évaporateur pelliculaire

(30) Priorität: 04.03.2003 DE 10309392
(43) Veröffentlichungstag der Anmeldung: 09.08.2006
(62) Teilanmeldung aus: 04716558.4
(73) Patentinhaber: BASF SE, 67056 Ludwigshafen (DE)
(72) Erfinder: Ströfer, Eckhard, 68163 Mannheim (DE); Lang, Neven, 68163 Mannheim (DE); Lichtfers, Ute, 76187 Karlsruhe (DE); Steinbrenner, Ulrich, 67435 Neustadt (DE); Hasse, Hans, 67661 Kaiserslautern (DE)
(74) Vertreter: Isenbruck, Günter

(56) Entgegenhaltungen:
- DE-A- 10 036 602
- DE-A- 19 925 870
- DE-B- 1 260 143
- DE-B- 1 291 747
- GB-A- 1 002 269
- GB-A- 1 048 191
- US-A- 2 581 881

## Beschreibung

Die Erfindung betrifft ein Verfahren zur Auftrennung flüssiger Stoffgemische in einem Filmverdampfer, insbesondere zur Auftrennung flüssiger Gemische von Polyoxymethylenglykolen.

Formaldehyd ist eine wichtige Industriechemikalie und wird zur Herstellung zahlreicher Industrieprodukte und Verbrauchsartikel eingesetzt. In über 50 Industriezweigen wird derzeit Formaldehyd verwendet, im Wesentlichen in Form von wässrigen Lösungen oder Formaldehyd enthaltenden Kunstharzen. Kommerziell erhältliche, wässrige Formaldehydlösungen weisen Gesamtkonzentrationen von 20 bis 55 Gew.-% Formaldehyd in Form von monomerem Formaldehyd, Methylenglykol und oligomeren Polyoxymethylenglykolen auf.

Wasser, monomerer (freier) Formaldehyd, Methylenglykol und oligomere Polyoxymethylenglykole unterschiedlicher Kettenlänge liegen in wässrigen Lösungen nebeneinander in einem thermodynamischen Gleichgewicht vor, das durch eine bestimmte Verteilung der Polyoxymethylenglykole unterschiedlicher Länge gekennzeichnet ist. Der Begriff "wässrige Formaldehydlösung" bezieht sich dabei auch auf Formaldehydlösungen, die praktisch kein freies Wasser, sondern im Wesentlichen nur noch in Form von Methylenglykol bzw. in den endständigen OH-Gruppen der Polyoxymethylenglykole chemisch gebundenes Wasser enthalten. Dies ist insbesondere bei konzentrierten Formaldehydlösungen der Fall. Polyoxymethylenglykole können dabei beispielsweise zwei bis neun Oxymethyleneinheiten aufweisen. In wässrigen Formaldehydlösungen können also Dioxymethylenglykol, Trioxymethylenglykol, Tetraoxymethylenglykol, Pentaoxymethylenglykol, Hexaoxymethylenglykol, Heptaoxymethylenglykol, Octaoxymethylenglykol und Nonaoxymethylenglykol nebeneinander vorliegen. Die Verteilung ist konzentrationsabhängig. So liegt das Maximum der Verteilung in verdünnten Formaldehydlösungen bei Homologen niedriger Kettenlänge, während es in konzentrierteren Formaldehydlösungen bei Homologen höherer Kettenlänge liegt. Eine Gleichgewichtsverschiebung hin zu längerkettigen (höhermolekularen) Polyoxymethylenglykolen kann durch Wasserentzug, beispielsweise durch einfache Destillation in einem Filmverdampfer, erfolgen. Die Gleichgewichtseinstellung erfolgt dabei mit endlicher Geschwindigkeit durch die intermolekulare Kondensation von Methylenglykol und niedermolekularen Polyoxymethylenglykolen unter Wasserabspaltung zu höhermolekularen Polyoxymethylenglykolen.

Darüber hinaus enthalten wässrige Formaldehydlösungen häufig noch Nebenkomponenten. So kann zum Beispiel Methanol in Konzentrationen von mehreren Gew.-% enthalten sein. Dieses Methanol kann in Folgereaktionen des Formaldehyds störend sein und muss deshalb fast vollständig abgetrennt werden. Nun bildet Methylenglykol als einfachster hydratisierter Formaldehyd mit Methanol ein Acetal (Methylal), das in dem Gesamtsystem Formaldehyd, Wasser, Methylenglykol-Halbacetal und Methylenglykol-Vollacetal die am leichtesten flüchtige Komponente darstellt. Daher kann Methanol als Methylenglykol-Vollacetal aus der wässrigen Formaldehyd-Lösung durch Verdampfen entfernt werden. Die Gleichgewichtseinstellung zwischen Methylenglykol, Methanol, Methylenglykol-Halbacetal und Methylenglykol-Vollacetal erfolgt dabei mit endlicher Geschwindigkeit und kann durch Katalyse beschleunigt werden.

Für bestimmte chemische Synthesen unter Einsatz von Formaldehyd ist es ferner wünschenswert, Formaldehydlösungen mit einer bestimmten Molekulargewichtsverteilung der darin enthaltenen Polyoxymethylenglykole einzusetzen. So wurde beispielsweise gefunden, das eine Formaldehydlösung direkt in eine Polykondensation zur Herstellung von Oxymethylenhomo- oder -copolymeren überführt werden kann, wenn das Molverhältnis von Polyoxymethylenglykolen zu monomerem Formaldehyd und Methylenglykol größer als 1 : 0,6 und bevorzugt größer als 1 : 0,4 ist. Bei der Herstellung von Methylendi(phenylamin) aus Anilin und Formaldehyd ist es wünschenswert, den Formaldehyd in Form der höheren Homologen zuzugeben, um die Bildung des unerwünschten Nebenproduktes N-Methyl-MDA zu unterbinden. Für die Herstellung von Trioxan und Tetraoxan durch Ringschluss sind Formaldehydfraktionen mit einem hohen Gehalt an Trioxymethylenglykol und Tetraoxymethylenglykol wünschenswert. Ferner ist es wünschenswert, in Synthesen, die den Einsatz wässriger Formaldehydlösungen erfordern, die Wasserlast zu verringern, indem möglichst hochkonzentrierte wässrige Formaldehydlösungen eingesetzt werden.

Diese hohen Konzentrationen können dadurch erreicht werden, dass dem System ständig Wasser entzogen wird, wobei sich durch Kondensation von Polyoxymethylenglykolen ständig Wasser nachbildet, wobei die Polyoxymethylenglykolketten anwachsen. Die Kondensationsreaktion kann katalytisch beschleunigt werden.

DE-A 199 25 870 beschreibt ein Verfahren, bei dem eine wässrige Formaldehydlösung in einem Filmverdampfer in eine an Polyoximethylenglykolen angezeichnete und in eine an Polyoximethylenglykolen abgezeichnete Fraktion aufgetrennt wird und die an Polyoximethylenglykolen reiche Fraktion anschließend weiter umgesetzt wird.

Aufgabe der Erfindung ist es, ein einfaches Verfahren bereitzustellen, mit dem Formaldehydlösungen erhalten werden können, die eine hohe Formaldehydkonzentration aufweisen und/oder auch eine gezielte Verteilung an Polyoxymethylenglykolen aufweisen.

Gelöst wird die Aufgabe durch ein Verfahren zur Auftrennung eines flüssigen Stoffgemischs enthaltend mindestens eine leichtflüchtige und mindestens eine schwerflüchtige Komponente in einem Filmverdampfer, bei dem
(i) ein kontinuierlicher Strom eines flüssigen Ausgangsstoffgemischs bereitgestellt wird,
(ii) aus dem kontinuierlichen Strom ein Flüssigkeitsfilm erzeugt und mit einer Wärmetauscherfläche des Filmverdampfers in Kontakt gebracht wird,
(iii) der Flüssigkeitsfilm teilweise verdampft wird, wobei ein an leichtflüchtigen Komponenten angereicherter Gasstrom und ein an schwerflüchtigen Komponenten angereicherter Flüssigkeitsstrom erhalten wird,
   wobei
(iv) die Wärmetauscherfläche mit einem katalytisch aktiven Material beschichtet ist, das
(v) in dem Flüssigkeitsfilm eine chemische Umsetzung katalysiert, bei der mindestens eine leichtflüchtige Komponente gebildet wird,
dadurch gekennzeichnet, dass das flüssige Ausgangsstoffgemisch eine wässrige Formaldehydlösung ist, die leichtflüchtigen Komponenten freier Formaldehyd (CH₂O), Methylenglykol (HOCH₂OH) und Wasser sind, die schwerflüchtigen Komponenten ausgewählt aus der Gruppe bestehend aus Polyoxymethylenglykolen (HO(CH₂O)ₙH) mit 2 bis 20 Oxymethyleneinheiten (n = 2 - 20) sind, und die katalysierte chemische Umsetzung die sauer oder basisch katalysierte Kondensation von Methylenglykol und Polyoxymethylenglykolen, wobei niedermolekulare Polyoxymethylenglykole zu höhermolekularen Polyoxymethylenglykolen reagieren und Wasser als leichtflüchtige Komponente gebildet wird, ist.

Das aufzutrennende flüssige Stoffgemisch enthält mindestens eine leichtflüchtige und mindestens eine schwerflüchtige Komponente. Die vorstehend verwendeten Begriffe "leichtflüchtig" und "schwerflüchtig" haben keine absolute, sondern eine relative Bedeutung. "Leichtflüchtig" bedeutet leichtflüchtig relativ zu der oder den "schwerflüchtigen" Komponenten, und umgekehrt. Die Siedepunkte der leichtflüchtigen und der schwerflüchtigen Komponenten liegen dabei im Allgemeinen so weit auseinander, dass es schon durch einfache Verdampfung zu einer signifikanten Anreicherung der leichtflüchtigen Komponente in der Gasphase relativ zur flüssigen Phase kommt.

Der oder die leichtflüchtigen Komponenten bzw. der oder die schwerflüchtigen Komponenten können bereits in dem dem Filmverdampfer zugeführten Ausgangsstoffgemisch vorliegen, oder aber auch erst während der katalysierten chemischen Umsetzung gebildet werden.

Die erfindungsgemäße Kopplung von chemischer Umsetzung und Verdampfung von gebildeten leichtflüchtigen Komponenten in einem Filmverdampfer weist eine Reihe von Vorteilen auf.

Durch die Entfernung von während der chemischen Umsetzung gebildeten leichtflüchtigen Komponenten aus dem chemischen Gleichgewicht wird dieses auf die Seite der Produkte verschoben. Durch die katalytische Beschichtung der Wärmetauscherwand wird eine schnelle Einstellung des (neuen) Gleichgewichtszustands erreicht.

Eine schnelle Entfernung von während der Umsetzung gebildeten leichtflüchtigen Komponenten aus dem flüssigen Stoffgemisch kann auch dann wünschenswert sein, falls diese, beispielsweise mit den Edukten der Umsetzung, Folgereaktionen eingehen, die die Selektivität der Umsetzung mindern oder zur Bildung unerwünschter Nebenprodukte führen.

Die Auftrennung des flüssigen Stoffgemischs wird in einem Filmverdampfer durchgeführt.

Filmverdampfer weisen einen sehr guten Wärmeübergang auf, da das Verhältnis Reaktionsvolumen zu Wärmetauscherfläche klein ist. Dadurch ist eine quasi isotherme Reaktionsführung und eine gleichmäßige Temperaturverteilung (Vermeidung von Temperaturgradienten) in dem Reaktionsgemisch möglich. Dies wirkt sich besonders dann vorteilhaft aus, falls durch Temperaturerhöhung in dem Reaktionsgemisch unerwünschte Parallel- oder Folgereaktionen begünstigt werden.

In Filmverdampfern lassen sich kleine Verweilzeiten bei engen Verweilzeitverteilungen realisieren, sofern diese nicht mit einem Umlauf betrieben werden. Enge Verweilzeitverteilungen sind vor allem dann von Vorteil, falls die gebildeten Produkte der chemischen Umsetzung unerwünschte Folgereaktionen eingehen können.

Geeignete Bauformen des erfindungsgemäß eingesetzten Filmverdampfers sind beispielsweise der Fallfilmverdampfer, der Dünnschichtverdampfer und der Wendelrohrverdampfer sowie Kombinationen der genannten Apparate.

In den erfindungsgemäß eingesetzten Filmverdampfern können sich beschichtete mit unbeschichteten Wandsegmenten abwechseln.

Durch das Abdampfen von Wasser, aber auch von Methylenglykol und freiem Formaldehyd, aus der wässrigen Formaldehydlösung wird eine Nichtgleichgewichtsverteilung der oligomeren Polyoxymethylenglykole in der Lösung erzeugt. Durch die Beschichtung aus katalytisch aktivem Material auf der Wärmetauscherfläche wird die Kondensationsreaktion katalysiert, die unter Abspaltung von weiterem Wasser verläuft, wodurch sich die Verteilung der Polyoxymethylenglykole in der Lösung in Richtung auf die Gleichgewichtsverteilung verschiebt. Dadurch wird eine Verteilung der Polyoxymethylenglykole in der (aufkonzentrierten) Lösung erreicht, die zumindest näher an der Gleichgewichtsverteilung liegt, als dies ohne die Gegenwart von katalytisch aktivem Material der Fall wäre. Durch die Abdampfrate, die Säurestärke des Katalysators und die Verweilzeit der Lösung in dem Verdampfer kann das Ausmaß der Kondensationsreaktion gesteuert werden.

Geeignete katalytisch aktive Materialien sind grundsätzlich alle Materialien, die die oben genannten chemischen Umsetzungen katalysieren. Im Falle der Formaldehyd-Oligomerisierung sind dies Materialien mit sauren oder basischen Eigenschaften, vorzugsweise mit saueren Eigenschaften. Beispielsweise können Folien aus saurem lonenaustauschermaterial, wie sie beispielsweise als ionenselektive Membranen für die Herstellung von NaOH und HCl aus NaCl durch sogenannte "Wasserspaltung" eingesetzt werden, eingesetzt werden. Das lonenaustauschermaterial ist bevorzugt ein sulfoniertes Styrol-Divinylbenzol-Copolymer oder ein perfluoriertes Polymer vom Typ Nafion®, das saure Gruppen gebunden enthält. Derartige Folien können auf der Wärmetauscherfläche des Filmverdampfers aufgeklebt, mittels Unterdruck festgehalten, mechanisch befestigt oder auch direkt auf die Wärmetauscherfläche aufpolymerisiert werden.

Geeignete katalytisch aktive Materialien mit sauren Eigenschaften sind Komposite aus einem porösen oder gelförmigen Polymer und Partikeln aus heterogenen Säuren. Bevorzugte heterogene Säuren sind Zeolithe, insbesondere Chabazit, Mazzit, Erionit, Ferrierit, Faujasit, Zeolith L, Mordenit, Offretit, Zeolith Rho, ZBM-10, ZSM-5, ZSM-12, MCM-22 und Zeolith Beta, ferner Tone, insbesondere Montmorillonit, Muskovit, Kaolinit und deren säureaktivierten Formen, saure Mischoxide, insbesondere WO₃-TiO₂, MoO₃₋TiO₂, MoO₃-ZrO₂, Al₂O₃-SiO₂, ZrO₂-SiO₂, TiO₂-SiO₂, TiO₂-ZrO₂ und Niobsäure, weiterhin SiO₂-Sulfonsäurekomposite vom Typ Deloxan® und sulfonierte, oxidierte Aktivkohle.

Es ist auch möglich, die Wärmetauscherfläche des erfmdungsgemäßen Filmverdampfers ohne Klebstoff oder polymere Binder zu beschichten. Dabei übernehmen oxidische Deckschichten die Bindefunktion, auf denen direkt über Metall-Sauerstoff-Bindungen die sauren Oxide gebunden sind. Geeignete Verfahren sind in J. Yamazaki, K. Tsutsumi, Micropor. Mat. 5 (1995), 245 ff, O. L. Oudshoorn et al., Chem. Eng. Sci. 54 (1999), S. 1413 ff, DE-A 196 07 577 und DE-A 42 16 846 beschrieben. So können große zeolithische oder zeolithanaloge Molekularsieb-Kristalle von beispielsweise 3 bis 500 µm Teilchendurchmesser auf der Wärmetauscherfläche fixiert werden, indem man diese bei der Fertigung auf die Erweichungstemperatur vorheizt und auf die vorgeheizte Oberfläche rieselfähiges Pulver der Kristalle kontinuierlich aufstäubt. Die Kristalle bleiben dabei in einer dünnen Schicht von beispielsweise einer bis 5 Kristalllagen an der erweichten Oberfläche haften und sind nach dem Abkühlen der Oberfläche dauerhaft auf dieser fixiert. Um besonders harte Beschichtungen zu erzeugen, kann die Wärmetauscheroberfläche vor dem Bestäuben noch mit einem Haftvermittler vorbehandelt werden.

Ferner kann die Wärmetauscherfläche des Filmverdampfers mit makroskopischen Elementen wie Zylindern, Zylindersegmenten oder Platten aus heterogenen Säuren belegt werden. Diese Elemente werden durch Pressen, Gießen oder Extrudieren hergestellt und verklebt oder gesintert und anschließend auf die Wärmetauscherfläche aufgeklebt, geschraubt, genietet oder anderweitig mechanisch befestigt.

Die mit katalytisch aktivem Material beschichtete Wärmetauscherfläche des erfindungsgemäßen Filmverdampfers ist die gesamte zur Verfügung stehende Wärmetauscherfläche oder nur ein Teil davon. Beispielsweise können sich beschichtete und unbeschichtete Segmente der Wärmetauscherfläche abwechseln.

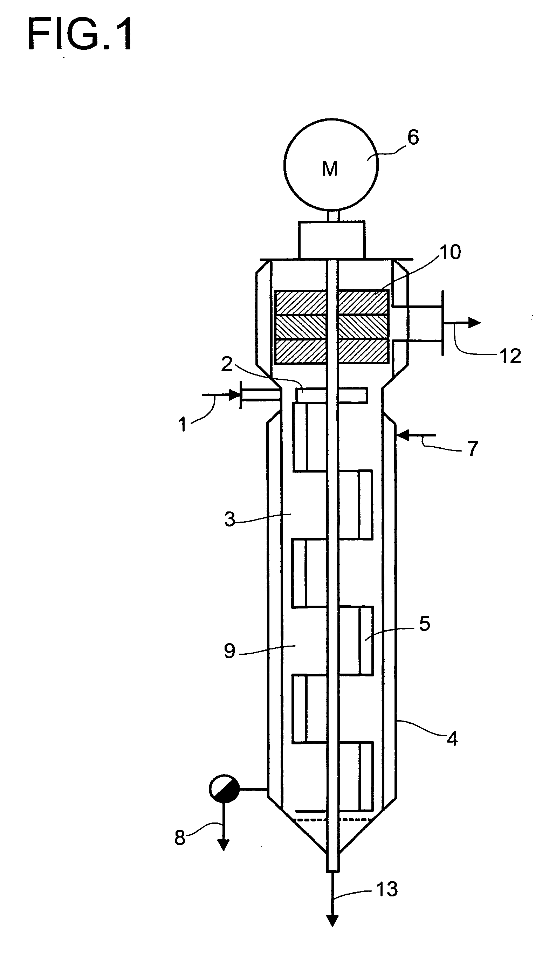

Ein für das beschriebene Verfahren besonders geeigneter Filmverdampfer ist in Fig. 1 gezeigt. Es handelt sich hierbei um einen Dünnschichtverdampfer. Der Zulauf 1, bestehend aus Rohlösung (Ausgangsstoffgemisch) und gegebenenfalls Rückfährstrom , wird zunächst einem Flüssigkeitsverteiler 2 zugeführt. Dieser verteilt die Rohlösung auf eine Verdampferfläche 3. Die Verdampferfläche 3 (Wärmetauscherfläche) ist üblicherweise zylindrisch geformt, kann jedoch auch zumindest teilweise konische Form aufweisen. Je nach Anwendungsfall kann sie z.B. aus Glas, Metall, Kunststoffen oder Keramik bestehen und entweder selbst katalytische Eigenschaften aufweisen oder katalytisch beschichtet oder mit katalytisch aktiven Substanzen dotiert sein. Sie steht mit der Innenseite eines Heizmantels 4, der für eine Wärmezufuhr zur Verdampferfläche 3 sorgt, in thermischem Kontakt. Der Flüssigkeitsverteiler 2 trägt dazu bei, dass die Zulauflösung gleichmäßig auf den Umfang der Verdampferfläche 3 verteilt wird.

Rotierende Wischerblätter 5 verteilen die Lösung sodann weiter über die Verdampferfläche 3, sorgen für eine Aufrechterhaltung und Förderung eines Flüssigkeitsfilmes auf der Verdampferfläche 3 und tragen zur Intensivierung des Wärme- und Stofftransportes in der Flüssigkeit bei. Diese Wischerblätter 5 sind starr oder beweglich auf einem Rotor montiert, der von einer Antriebsvorrichtung 6 angetrieben wird. Je nach Gestaltung und Positionierung der Wischerblätter 5 kann dabei der Flüssigkeitsfilm eher dünn gehalten oder aufgestaut werden. Damit ist eine Veränderung der Verweilzeit bzw. der Verweilzeitverteilung der Lösung im Filmverdampfer möglich. Die typische Verweilzeit der Lösung im Filmverdampfer beträgt zwischen 1 s und 10 min, bevorzugt zwischen 2 s und 2 min.

Durch einen Heizmittelzulauf 7 wird ein Heizmittel, z.B. Wasserdampf, in den Heizmantel geführt. Dieses heizt die Verdampferfläche auf. Abgekühltes Heizmittel, z.B. kondensiertes Wasser im Falle von Wasserdampf als Heizmittel, wird über den Heizmittelablauf 8 abgeführt.

Durch die Wärmezufuhr zur Verdampferfläche 3 wird ein Teil der dem Filmverdampfer zugeführten Lösung verdampft, wodurch sich der nicht verdampfte Teil der Lösung in seiner Zusammensetzung verändert. Durch die katalytisch aktive Beschichtung der Verdampferfläche werden chemische Reaktionen der Komponenten des Gemisches katalysiert, die dem Verdampfungsprozess überlagert sind und zu einer erhöhten Ausbeute an der gewünschten Komponente führen.

Der entstandene Brüden (d.h. Dampf bzw. Gase) gelangt in einen Phasentrennraum 9 und von dort in einen Tropfenabscheider 10. Mit dem Brüden mitgerissene Flüssigkeitströpfchen werden hier aus der Gasphase entfernt und in die Flüssigkeit (Lösung) zurückgeführt. Das Konzentrat 13 wird auf geeignete Weise aus dem Phasentrennraum 9 ausgeleitet, während der Brüden 12 aus dem Tropfenabscheider 10 abgezogen wird. Der Brüden wird in einen nicht dargestellten Kondensator eingeleitet, wo er zumindest teilweise zu einem Kondensat kondensiert.

Gas- und Flüssigphase können wie in Figur 1 gezeigt, im Gegenstrom geführt werden. Sie können aber auch im Gleichstrom geführt werden.

Wenn in den beschriebenen Filmverdampfer eine wässrige Formaldehydlösung eingeleitet wird, reichern sich in der Flüssigkeit 13 die Polyoxymethylenglykole an, während das Kondensat aus dem Brüden 12 arm an Polyoxymethylenglykolen und reich an Formaldehyd und Methylenglykol ist. Auf diese Weise sind zwei Fraktionen, nämlich Konzentrat 13 und (Teil-)Kondensat aus dem Brüden 12 entstanden, in denen bestimmte Komponenten der ursprünglich zugeführten Rohlösung 1 selektiv angereichert sind.

Der Kondensator kann in einer besonderen Ausführungsform in den Verdampfungskörper integriert sein, wodurch sich eine kürzere Verweilzeit der verdampften Komponenten in der Dampfphase sowie eine kompaktere Bauweise ergeben.

Geeignete Betriebsbedingungen für den Filmverdampfer sind allgemein eine Temperatur zwischen 10°C und 200°C, bevorzugt zwischen 50°C und 150°C, bei einem Absolutdruck zwischen 0,5 mbar und 20 bar, bevorzugt zwischen 30 mbar und 2 bar.

Neben der in Fig. 1 dargestellten Ausführung eines Filmverdampfers kann auch ein Apparat ohne mechanische Beeinflussung des Flüssigkeitsfilmes auf der Verdampfungsfläche eingesetzt werden. Die Wärmeübertragungsfläche dieser Fallfilm- oder Fallstromverdampfer kann dabei als Rohre, Platten oder Wendelrohr (spiralförmiges Rohr) ausgebildet sein.

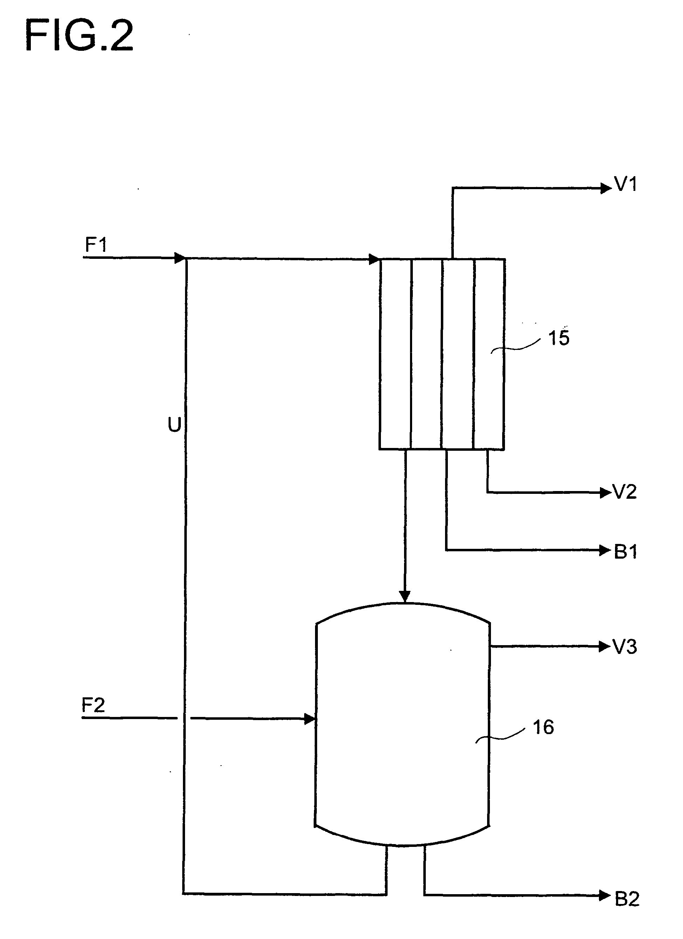

Abhängig von den konkreten Verfahrensanforderungen kann ein Filmverdampfer in verschiedenen Betriebsweisen eingesetzt werden. Die Fig. 2 zeigt eine schematische Übersicht über die möglichen Betriebsweisen. Hierbei ist der eigentliche Filmverdampfer mit 15 und ein Brüdenabscheider (d.h. Phasentrennraum mit Tropfenabscheider) mit 16 bezeichnet. Sowohl der Filmverdampfer 15 als auch der Brüdenabscheider 16 können von der speziellen Bauform, wie sie in Fig. 1 dargestellt ist, abweichen und gegenüber der Fig. 1 weitere Zu- und Abläufe aufweisen. V1, V2 und V3 bezeichnen dampfförmige Ströme, alle anderen Ströme sind üblicherweise flüssig.

Der Filmverdampfer 15 kann bezüglich der austretenden, nicht verdampften Flüssigkeit im einmaligen Durchlauf oder in Kreislauffahrweise betrieben werden. Der Umlauf U ist technisch für einen Betrieb in Kreislauffahrweise notwendig.

In nachstehender Tabelle sind die aktiven Ströme für die jeweils möglichen Betriebsweisen angegeben.

| | F1 | F2 | B1 | B2 | V1 | V2 | V3 | U |
|---|---|---|---|---|---|---|---|---|
| Einmaliger Durchlauf, Brüden und Flüssigkeit im Gegenstrom | X | | X | | X | | | |
| Einmaliger Durchlauf, Brüden und Flüssigkeit im Gleichstrom | X | | X | | | X | | |
| Kreislauffahrweise, Zulauf in Umlauf, Brüden und Flüssigkeit im Gleichstrom | X | | | X | | X | | X |
| Kreislauffahrweise, Zulauf in Umlauf, Brüden und Flüssigkeit im Gegenstrom | X | | | X | X | | | X |
| Kreislauffahrweise, Zulauf in Brüdenabscheider, Brüden und Flüssigkeit im Gleichstrom | | X | (X) | X | | X | (X) | X |
| Kreislauffahrweise, Zulauf in Brüdenabscheider, Brüden und Flüssigkeit im Gegenstrom | | X | | X | X | | (X) | X |

Der Filmverdampfer kann an geeigneter Stelle Seitenabzüge aufweisen, über die Flüssigkeitsfraktionen mit einem bestimmten Anreicherungsgrad entnommen werden können. Es können auch mehrere Filmverdampfer zu einer Verdampferkaskade in Serie geschaltet werden, wobei der flüssige, aufkonzentrierte Ablauf des einen Filmverdampfers - gegebenenfalls nach Entnahme eines Seitenstroms - den Zulauf für den nächsten Filmverdampfer der Verdampferkaskade bildet.

Es ist auch möglich, im Gegenstrom zu dem Flüssigkeitsstrom eine reaktive gasförmige Komponente in den Filmverdampfer einzubringen, die mit einer oder mehreren Komponenten des flüssigen Ausgangsstoffgemischs oder einer oder mehrerern der gebildeten schwerflüchtigen Komponenten reagiert. So können die gebildeten schwerflüchtigen Komponenten in dem ablaufenden Flüssigkeitsfilm im unteren Teil des Filmverdampfers Folgereaktionen mit den in dem aufsteigenden Gasstrom enthaltenen Komponenten eingehen. Die Wärmetauscherfläche kann dabei mit einem katalytisch aktiven Material beschichtet sein, das diese Folgereaktionen der einen oder mehreren gebildeten schwerflüchtigen Komponente katalysiert. Dieses katalytisch aktive Material kann von dem katalytisch aktiven Material, das die Bildung der schwerflüchtigen Komponenten katalysiert, verschieden sein. Es kann sich auch um das gleiche katalytisch aktive Material handeln. Verschiedene katalytisch aktive Materialien können in unterschiedlichen Segmenten der Wärmetauscheroberfläche vorliegen.

Beispielsweise kann im Gegenstrom zur Fließrichtung des Flüssigkeitsfilms an der Wärmetauscherwand und im Gleichstrom zu abdampfendem Wasser, Formaldehyd und Methylenglykol ein reaktives gasförmiges Edukt in den Verdampfer eingebracht werden. Dieses reagiert dann mit den Polyoxymethylenglykolen zu (schwerflüchtigen) Produkten, die am Boden des Verdampfers ablaufen. Der Verdampfer kann dann beispielsweise Segmente aufweisen, die mit einem sauren oder basischen Material zur Katalyse der Kondensationsreaktion beschichtet sind, und Segmente aufweisen, die mit einem katalytisch aktiven Material zur Katalyse der Folgereaktion der Polyoxymethylenglykole beschichtet sind.

Beispiele für derartige Reaktionen sind
- die Umsetzung von Acetylen mit Formaldehydlösung in einer Reppe-Reaktion zu Butindiol, das zu Butandiol weiter hydriert werden kann;
- Aldolisierungsreaktionen von Formaldehyd mit sich selbst oder höheren Aldehyden zu mehrwertigen Alkoholen und Zuckern, Pentaerythrit, Trimethylolpropan und Neopentylglykol;
- die Umsetzung von Formaldehyd und CO zu Glykolsäure;
- die Herstellung chelatisierender Substanzen wie Glykolnitrile aus Lösungen von Formaldehyd;
- die Umsetzung von Formaldehyd mit Olefinen in einer Prins-Reaktion zu alpha-Hydroxymethylverbindungen;
- Kondensationsreaktionen von Formaldehyd mit Aminen, wie Anilin oder Toluidin, zu Schiff'schen Basen, die zu Diphenylmethanderivate, wie Methandiphenyldiamin weiterreagieren können;
- Umsetzung von Hydroxylamin mit Formaldehyd zu Oximen;
- Umsetzung von Formaldehyd mit Diolen zu cyclischen Ethern, beispielsweise von Glykol und Formaldehyd zu Dioxolan;
- Umsetzung von Formaldehyd mit Alkoholen zu Ethern wie Polyoxymethylendialkylether, bevorzugt Polyoxymethylendimethylether.

Die Listung ist nicht vollständig. Lehrbücher der organischen Chemie und der technischen Chemie enthalten weitere Beispielreaktionen. Die Listung soll aber beispielhaft die industrielle Bedeutung des Formaldehyds als Synthesebaustein im gesamten Bereich der organischen Chemie verdeutlichen. Dies betrifft sowohl kleintonnagige Zwischenprodukte im Pharma- oder Pflanzenschutzbereich wie z.B. Oxime als auch großtonnagige Produkte wie Diphenylmethanderivate und Polyoxymethylendialkylether.

## Patentansprüche

1. Verfahren zur Auftrennung eines flüssigen Stoffgemischs, enthaltend mindestens eine leichtflüchtige und mindestens eine schwerflüchtige Komponente, in einem Filmverdampfer, bei dem
(i) ein kontinuierlicher Strom eines flüssigen Ausgangsstoffgemischs bereitgestellt wird,
(ii) aus dem kontinuierlichen Strom ein Flüssigkeitsfilm erzeugt und mit einer Wärmetauscherfläche des Filmverdampfers in Kontakt gebracht wird,
(iii) der Flüssigkeitsfilm teilweise verdampft wird, wobei ein an der mindestens einen leichtflüchtigen Komponenten angereicherter Gasstrom und ein an der mindestens einen schwerflüchtigen Komponenten angereicherter Flüssigkeitsstrom erhalten wird,
wobei
(iv) die Wärmetauscherfläche mit einem katalytisch aktiven Material beschichtet ist, das
(v) in dem Flüssigkeitsfilm eine chemische Umsetzung katalysiert, bei der mindestens eine leichtflüchtige Komponente gebildet wird,
**dadurch gekennzeichnet, dass** das flüssige Ausgangstoffgemisch eine wässrige Formaldehydlösung ist, die leichtflüchtigen Komponenten ausgewählt sind aus der Gruppe bestehend aus freiem Formaldehyd (CH₂O), Methylenglykol (HOCH₂OH) und Wasser, die schwerflüchtigen Komponenten ausgewählt sind aus der Gruppe bestehend aus Polyoxymethylenglykolen (HO(CH₂O)ₙH) mit 2 bis 20 Oxymethyleneinheiten (n = 2 - 20), und die katalysierte chemische Umsetzung die sauer oder basisch katalysierte Kondensation von Methylenglykol und Polyoxymethylenglykolen ist, wobei aus niedermolekulare Polyoxymethylenglykolen höhermolekulare Polyoxymethylenglykole gebildet werden und Wasser als leichtflüchtige Komponente gebildet wird.

2. Verfahren nach Anspruch 1, **dadurch gekennzeichnet, dass** der Filmverdampfer als Fallfilmverdampfer, Dünnschichtverdampfer, Wendelrohrverdampfer oder Kombinationen dieser Apparate ausgebildet ist.

3. Verfahren nach Anspruch 1 oder 2, **dadurch gekennzeichnet, dass** das katalytisch aktive Material saure Eigenschaften hat.

4. Verfahren nach einem der Ansprüche 1 bis 3, **dadurch gekennzeichnet, dass** das katalytisch aktive Material ein Ionenaustauschermaterial oder ein Komposit aus einem porösen oder gelförmigen Polymer und einem Zeolith ist.

5. Verfahren nach einem der Ansprüche 1 bis 4, **dadurch gekennzeichnet, dass** die Wärmetauscherfläche beschichtete und unbeschichtete Segmente aufweist.

## Claims

1. A process for separating a liquid mixture comprising at least one readily volatile and at least one sparingly volatile component in a film evaporator, in which
(i) a continuous stream of a liquid starting material mixture is provided,
(ii) a liquid film is produced from the continuous stream and is brought into contact with a heat exchange surface of the film evaporator,
(iii) the liquid film is partly evaporated, a gas stream enriched with the at least one readily volatile component and a liquid stream enriched with the at least one sparingly volatile component being obtained,
where
(iv) the heat exchange surface is coated with a catalytically active material which
(v) catalyzes, in the liquid film, a chemical reaction in which at least one readily volatile component is formed,
wherein the liquid starting material mixture is an aqueous formaldehyde solution, the readily volatile components are selected from the group consisting of free formaldehyde (CH₂O), methylene glycol (HOCH₂OH) and water, the sparingly volatile components are selected from the group consisting of polyoxymethylene glycols (HO(CH₂O)ₙH) having from 2 to 20 oxymethylene units (n=2-20), and the catalytic chemical reaction is the acid- or base-catalysed condensation of methylene glycol and polyoxymethylene glycols, higher molecular weight polyoxymethylene glycols being formed from low molecular weight polyoxymethylene glycols and water being formed as a readily volatile component.

2. The process according to claim 1, wherein the film evaporator is in the form of a falling-film evaporator, thin-film evaporator, helical-tube evaporator or a combination of these apparatuses.

3. The process according to claim 1 or 2, wherein the catalytically active material has acidic properties.

4. The process according to any of claims 1 to 3, wherein the catalytically active material is an ion exchange material or a composite of a porous or gel-like polymer and a zeolite.

5. The process according to any of claims 1 to 4, wherein the heat exchange surface has coated and uncoated segments

## Revendications

1. Procédé de séparation d'un mélange liquide de substances, contenant au moins un composant léger et au moins un lourd, dans un évaporateur pelliculaire, dans lequel :
(i) un flux continu d'un mélange liquide de substances de départ est procuré,
(ii) du flux continu est produit un film liquide, qui est mis à réagir avec une surface échangeuse de chaleur de l'évaporateur pelliculaire,
(iii) le film liquide est partiellement évaporé, un flux de gaz enrichi d'au moins un composant léger et un flux liquide enrichi d'au moins un composant lourd étant obtenus,
dans lequel
(iv) la surface échangeuse de chaleur est revêtue d'un matériau catalytiquement actif,
(v) une réaction chimique catalyse dans le film liquide, au cours de laquelle se forme au moins un composant léger,
**caractérisé en ce que** mélange liquide de substances de départ est une solution aqueuse de formaldéhyde, les composants légers sont choisis parmi le groupe constitué du formaldéhyde libre (CH₂O), du méthylèneglycol (HOCH₂OH) et de l'eau, les composants lourds sont choisis parmi le groupe constitué de polyoxyméthylèneglycols (HO(CH₂O)ₙH) renfermant de 2 à 20 motifs oxyméthylènes (n = 2 - 20), et la réaction chimique catalysée est la condensation à catalyse acide ou basique du méthylèneglycol et de polyoxyméthylèneglycols, des polyoxyméthylèneglycols à poids moléculaires plus élevés étant formés à partir de polyoxyméthylèneglycols à faibles poids moléculaires et de l'eau étant formée en tant que composant léger.

2. Procédé selon la revendication 1, **caractérisé en ce que** l'évaporateur pelliculaire est configuré comme un évaporateur à film tombant, un évaporateur à couche mince, un évaporateur à tubes hélicoïdaux ou des combinaisons de ces appareils.

3. Procédé selon la revendication 1 ou 2, **caractérisé en ce que** le matériau catalytiquement actif a une propriété acide.

4. Procédé selon l'une des revendications 1 à 3, **caractérisé en ce que** le matériau catalytiquement actif est un matériau échangeur d'ions ou un composite constitué d'un polymère poreux ou sous forme de gel et d'un zéolithe.

5. Procédé selon l'une des revendications 1 à 4, **caractérisé en ce que** la surface échangeuse de chaleur présente des segments nus et revêtus.
